# EUROPÄISCHE PATENTANMELDUNG

(11) **EP 1 249 472 A2**
(43) Veröffentlichungstag der Anmeldung: **16.10.2002**
(21) Anmeldenummer: 02003424.5
(22) Anmeldetag: 14.02.2002
(51) Int. Cl.: C08L 67/02, B29C 71/00

(54) **Formteil mit hoher Kurzzeitwärmeformbeständigkeit**

(30) Priorität: 06.04.2001 DE 10117107
(71) Anmelder: Degussa AG, 40474 Düsseldorf (DE)
(72) Erfinder: Lohkämper, Hans-Günter, 45721 Haltern (DE); Stober, Siegbert, 45770 Marl (DE); Schüler, Ralf, Dr., 45659 Recklinghausen (DE)

(57) **Zusammenfassung**

Ein Formteil aus einer Formmasse, die
a) 35 bis 100 Gew.-% eines thermoplastischen Polyesters,
b) 0 bis 60 Gew.-% Füll- oder Verstärkungsstoffe,
c) 0 bis 20 Gew.-% eines schlagzähmodifizierenden Kautschuks,
d) 0 bis 30 Gew.-% eines Flammschutzmittels,
e) 0 bis 20 Gew.-% eines Synergisten und
f) 0 bis 5 Gew.-% andere Zusatzstoffe und/oder Verarbeitungsmittel
enthält und das für eine Dauer von mindestens 1 Stunde bei einer Temperatur von 180 bis 250 °C gelagert wird, weist eine verbesserte Kurzzeitwärmeformbeständigkeit auf.

## Beschreibung

Gegenstand der Erfindung sind ein Verfahren zur Herstellung eines Formteils mit hoher Kurzzeitwärmeformbeständigkeit sowie das nach diesem Verfahren hergestellte Formteil.

In der Elektro- bzw. Elektronikindustrie sind die Anforderungen an eine hohe Form- und Dimensionsbeständigkeit bestimmter Formteile bei hohen kurzzeitigen Wärmebelastungen insbesondere durch diverse Lötverfahren wie etwa Reflow- oder Wellenlöten gestiegen. Hier treten zum Teil Temperaturspitzen von 260 bis 450 °C in einem Zeitfenster von bis zu 30 Sekunden auf. Dies gilt hauptsächlich für SMD-Bauteile (surface-mounted devices) sowie MIDs (moulded interconnect devices, d.h. räumliche Schaltungsträger). Die in der Elektro- bzw. Elektronikindustrie für diese Anwendung hauptsächlich eingesetzten glasfaserverstärkten und selbstverlöschend eingestellten Formmassen auf Basis von Polyestern wie Polybutylenterephthalat genügen diesen Anforderungen nur sehr bedingt. Dies gilt erst recht, wenn bleifreie Lote verwendet werden, bei denen die Löttemperatur um ca. 30 °C höher liegt als bei bleihaltigen Loten.

Eine höhere Stabilität bei Wärmebelastung diverser Formteile kann durch eine Bestrahlung dieser Formteile mit β- oder γ-Strahlen erzielt werden. Der Grund für die höhere Belastbarkeit ist hierbei wahrscheinlich eine Vernetzung des Polymergerüstes. Zur Verstärkung dieses Effekts werden üblicherweise zusätzliche Vernetzungsverstärker als Additiv eingesetzt. Eine solche Vernetzung durch Bestrahlung wird auch dann erreicht, wenn die Polyesterformmasse im Polymergerüst olefinische Doppelbindungen enthält. Diese können durch Copolykondensation mit ungesättigten Monomeren wie beispielsweise 2-Buten-1,4-diol bei der Herstellung des Polyesters eingebaut werden; derartige vernetzte Formkörper sind in der EP-A-0 559 072, der EP-A-0 669 360 und der EP-A-0 679 689 beschrieben. Die Nachteile des Bestrahlungsverfahrens liegen jedoch auf der Hand: Es ist apparativ aufwendig, erfordert in der Regel eine zusätzliche Logistik, da üblicherweise bei einer externen Firma bestrahlt wird und ist daher teuer und zeitaufwendig.

Die Aufgabe der vorliegenden Erfindung bestand darin, diese Nachteile zu vermeiden und insbesondere eine noch höhere Wärmebelastbarkeit zu ermöglichen.

Diese Aufgabe wurde gelöst durch ein Verfahren, bei dem ein Formteil aus einer Polyesterformmasse, die
a) 35 bis 100 Gew.-% eines thermoplastischen Polyesters,
b) 0 bis 60 Gew.-% Füll- oder Verstärkungsstoffe,
c) 0 bis 20 Gew.-% eines schlagzähmodifizierenden Kautschuks,
d) 0 bis 30 Gew.-% eines Flammschutzmittels,
e) 0 bis 20 Gew.-% eines Synergisten und
f) 0 bis 5 Gew.-% andere Zusatzstoffe und/oder Verarbeitungsmittel enthält,

für eine Dauer von mindestens 1 Stunde, bevorzugt von 2 bis 24 Stunden und besonders bevorzugt von 4 bis 8 Stunden bei einer Temperatur von 180 bis 250 °C, bevorzugt von 190 bis 230 °C und besonders bevorzugt von 200 bis 220 °C gelagert wird.

Gegenstand der Erfindung sind auch die nach diesem Verfahren hergestellten Formteile.

Die Polyester werden in bekannter Weise durch Veresterung oder Umesterung und anschließende Polykondensation von organischen Dicarbonsäuren oder deren polyesterbildenden Derivaten sowie den entsprechenden Diolen in Gegenwart von Katalysatoren hergestellt.

Als organische Dicarbonsäure werden aliphatische, cycloaliphatische oder aromatische Säuren, ggf. auch im Gemisch, eingesetzt. Sie weisen 2 bis 36, vorzugsweise 4 bis 18 C-Atome im Kohlenstoffgerüst auf. Beispielsweise seien 1.4-Cyclohexandicarbonsäure, Adipinsäure, Sebacinsäure, Azelainsäure, Decandicarbonsäure, Dimerfettsäuren, Phthalsäure, Isophthalsäure, Terephthalsäure, Naphthalindicarbonsäuren, 4.4'-Diphenyldicarbonsäure, 4.4'-Diphenylsulfondicarbonsäure, 4.4'-Diphenyletherdicarbonsäure, 3-Hexen-1.6-dicarbonsäure, 3-Octen-1.8-dicarbonsäure, 10-Eicosen-1.20-dicarbonsäure oder Tetrahydrophthalsäure genannt. Die Dicarbonsäuren können einzeln oder als Gemisch eingesetzt werden.

Als Diol werden Alkandiole, Alkendiole oder Cycloalkandiole mit 2 bis 12 C-Atomen in der Kohlenstoffkette eingesetzt. Beispielsweise sind hierfür Ethylenglykol, Butandiol-1.4, Hexandiol-1.6, 1.4- bzw. 1.3-Dimethylolcyclohexan, Neopentylglykol, 2-Butendiol-1.4, 3-Hexendiol-1,6, 2-Pentendiol-1.5 oder 3-Methyl-2-pentendiol-1.5 geeignet. Die Diole können einzeln oder als Gemisch eingesetzt werden.

Nach Beendigung der Polykondensation weisen die Polyester üblicherweise eine Viskositätszahl im Bereich von 50 bis 200 cm³/g, vorzugsweise 70 bis 180 cm³/g auf, gemessen in einer 0,5 gew.-%igen Phenol/o-Dichlorbenzol-Lösung (Gewichtsverhältnis 1 : 1) bei 25 °C gemäß DIN 53 728/ISO 1628-Teil 5.

Im Rahmen der Erfindung bevorzugte Polyester sind Polyethylenterephthalat, Polypropylenterephthalat, Polybutylenterephthalat, Polyethylen-2.6-naphthalat und Polybutylen-2.6-naphthalat sowohl als Homopolymere als auch als Copolymere.

In einer weiteren bevorzugten Ausführungsform enthält der Polyester olefinische Doppelbindungen, die über ein ungesättigtes Monomeres, also über ein ungesättigtes Diol und/oder eine ungesättigte Dicarbonsäure eingebracht wurden. Sowohl die Diolkomponente als auch die Dicarbonsäurekomponente können hierbei 0,1 bis 100 Mol-% an ungesättigten Monomereinheiten enthalten.

Besonders bevorzugt werden hierbei Polyester eingesetzt, die aus Monomereinheiten bestehen, welche sich von folgenden Monomeren herleiten:
- Terephthalsäure und/oder 2.6-Naphthalindicarbonsäure sowie
- 0 bis 99,9 Mol-%, bevorzugt 75 bis 90 Mol-%, Butandiol-1.4 und
- 100 bis 0,1 Mol-%, bevorzugt 25 bis 10 Mol-%, 2-Butendiol-1.4.

Die Polyesterformmasse kann bis zu 60 Gew.-%, vorzugsweise 0,1 bis 50 Gew.-% und besonders bevorzugt 5 bis 45 Gew.-% an faser-, blättchen- oder teilchenförmigen Füllstoffen oder Verstärkungsmitteln oder Mischungen solcher Materialien enthalten.

Als faserförmige Füll- oder Verstärkungsstoffe seien hier beispielsweise Glasfasern, Kohlenstofffasern, Aramidfasern, Kaliumtitanatfasern und faserförmige Silikate wie Wollastonit genannt.

Blättchenförmige Füll- oder Verstärkungsstoffe sind beispielsweise Glimmer, Talkum oder Graphit.

Als teilchenförmige Füll- oder Verstärkungsstoffe seien beispielsweise Glaskugeln, Quarzmehl, Kaolin, Bornitrid, Calciumcarbonat, Bariumsulfat, Silikate, Siliciumnitrid, Titandioxid sowie Oxide bzw. Oxidhydrate von Magnesium oder Aluminium genannt.

Die Polyesterformmasse kann weiterhin Flammschutzmittel in Mengen von 0 bis 30 Gew.-% und vorzugsweise in Mengen von 0,1 bis 25 Gew.-% enthalten. Hierbei kommen alle Flammschutzmittel in Betracht, die üblicherweise für Polyesterformmassen verwendet werden, beispielsweise Polyhalogendiphenyl, Polyhalogendiphenylether, Polyhalogenphthalsäure und deren Derivate, Polyhalogenoligo- und -polycarbonate oder halogenierte Polystyrole, wobei die entsprechenden Bromverbindungen besonders wirksam sind; Melamincyanurat, Melaminphosphat, Melaminpyrophosphat, elementarer roter Phosphor; Organophosphorverbindungen wie Phosphonate, Phosphinate, Phosphinite; Phosphinoxide wie Triphenylphosphinoxid; Phosphine, Phosphite oder Phosphate wie Triphenylphosphat. Darüber hinaus sind als Flammschutzmittel auch solche Verbindungen geeignet, die Phosphor-Stickstoff-Bindungen enthalten, wie Phosphonnitrilchlorid, Phosphorsäureesteramide, Phosphorsäureamide, Phosphonsäureamide, Phosphinsäureamide, Tris(aziridinyl)-phosphinoxid oder Tetrakis(hydroxymethyl)phosphoniumchlorid.

Bei Verwendung eines Flammschutzmittels kann ein Synergist in Mengen bis zu 20 Gew.-%, vorzugsweise von 0,1 bis 15 Gew.-% mitverwendet werden. Als Beispiele dieser Synergisten seien Verbindungen des Cadmiums, Zinks, Aluminiums, Silbers, Eisens, Kupfers, Antimons, Zinns, Magnesiums, Mangans, Vanadiums und Bors genannt. Besonders geeignete Verbindungen sind z.B. Oxide der genannte Metalle, ferner Carbonate oder Oxicarbonate, Hydroxide sowie Salze organischer oder anorganischer Säuren wie Acetate oder Phosphate bzw. Hydrogenphosphate und Sulfate.

Daneben kann die Formmasse andere Zusatzstoffe und/oder Verarbeitungshilfsmittel enthalten, beispielsweise Antioxidantien, Wärmestabilisatoren, Lichtstabilisatoren, Farbstoffe, Pigmente, Gleitmittel, Entformungsmittel oder Fließhilfsmittel.

Die Polyesterformmasse kann nach bekannten Verfahren hergestellt werden, indem man die Ausgangskomponente in üblichen Mischvorrichtungen, insbesondere Zweischneckenextrudern, mischt und anschließend extrudiert. Nach der Extrusion wird das Extrudat abgekühlt, zerkleinert und getrocknet.

Aus der so erhaltenen Polyesterformmasse lassen sich Formteile mit Hilfe aller geeigneten Verfahren herstellen, beispielsweise durch Spritzgießen oder Extrudieren. Beispielhaft genannte Formteile sind Steckverbinder, Spulenkörper, Leiterplatten, Gehäuse mit Leiterplattenfunktion (sogenannte 3D-MIDS), Relaisbauteile, Kondensatorenbecher, Schalter, Gehäuseteile oder Kondensatorfolien.

Die Wärmelagerung kann auf jede bekannte Weise durchgeführt werden, beispielsweise in einem Trockenschrank an der Luft, unter Schutzgas oder im Vakuum; auf die Erhöhung der Kurzzeitwärmeformbeständigkeit hat dies keinen signifikanten Einfluss. Eine bei Wärmelagerung an der Luft eventuell auftretende Verfärbung kann beim Arbeiten unter Schutzgas oder im Vakuum vermieden werden. Als Schutzgas kommen in erster Linie Stickstoff oder Argon in Frage.

### In den Beispielen wurden folgende Formmassen verwendet:

### Formmasse 1

Polyesterformmasse, die folgende Komponenten enthält:

| | |
|---|---|
| 54 Gew.-% | eines Polybutylenterephthalats mit einer Viskositätszahl J, gemessen an einer Lösung von 0,5 g Polyester in 100 ml Phenol/o-Dichlorbenzol (Gewichtsverhältnis 1 : 1) bei 25 °C nach DIN 53 728/ISO 1628-Teil 5, von 107 cm³/g |
| 30 Gew.-% | Glasfasern |
| 10 Gew.-% | bromhaltiges Flammschutzmittel |
| 0,5 Gew.-% | Stabilisatoren und Entformungshilfsmittel |
| 5,5 Gew.-% | Antimontrioxid |

### Formmasse 2

Polyesterformmasse, die sich von der Formmasse 1 nur dadurch unterscheidet, dass sie 20 Gew.-% des Polybutylenterephthalats enthält, wobei die restlichen 34 Gew.-% an Polybutylenterephthalat ersetzt sind durch einen Copolyester, hergestellt aus Dimethylterephthalat und einer Mischung aus Butan-1.4-diol und 2-Buten-1.4-diol, wobei 18 Mol-% der Diolkomponente sich vom 2-Buten-1.4-diol herleiten.

Aus den Formmassen wurden mittels Spritzgießen 1,6 mm dicke UL-Stäbe (Formmassen 1 und 2) sowie Spulenkörper (Formmasse 2) hergestellt.

Von den aus der Formmasse 2 hergestellten Formkörpern wurde ein Teil gemäß dem Stand der Technik mit β-Strahlen behandelt, der andere Teil wurde der erfindungsgemäßen Wärmebehandlung unterzogen.

Die aus der Formmasse 1 hergestellten Formkörper wurden der gleichen Wärmebehandlung unterzogen wie die Formkörper aus der Formmasse 2.

Die Wärmebehandlung erfolgte in einem Umluftwärmeschrank bei 210 °C über einen Zeitraum von maximal 24 Stunden an der Luft.

Nach den unterschiedlichen Lagerungszeiten bzw. Bestrahlungsdosen wurde die Kurzzeitwärmeformbeständigkeit mit dem Vernetzungstester bestimmt ("Lötkolbentest"). Dabei wurde die Temperatur ermittelt, bei der eine beheizbare Spitze mit einem Durchmesser von 1 mm in 10 Sekunden bei einer Belastung von 150 g 0,1 mm tief in die Probenoberfläche eindringt. Während der Messung wurde die Temperatur der Prüfspitze so weit wie möglich konstant gehalten.

Die Ergebnisse sind in den Tabellen 1 und 2 wiedergegeben.

**Tabelle 1**

| **Strahlenvernetzung der Formteile aus der Formmasse 2 (Bestrahlungsdauer bis 24 Stunden)** | | |
|---|---|---|
| | Kurzzeitwärmeformbeständigkeit [°C] | |
| Strahlendosis [kGy] | 1,6 mm UL-Stab | Spulenkörper |
| 0 | 250 | 250 |
| 200 | 312 | 270 |
| 250 | 326 | 282 |
| 300 | 338 | 292 |
| 350 | 348 | 304 |

**Tabelle 2**

| **Wärmelagerung der Formteile aus den Formmassen 1 und 2 bei 210 °C** | | | |
|---|---|---|---|
| Zeit [h] | Kurzzeitwärmeformbeständigkeit [°C] | | |
| | Formmasse 1 | Formmasse 2 | Formmasse 2 |
| | 1,6 mm UL-Stab | 1,6 mm UL-Stab | Spulenkörper |
| 0 | 255 | 250 | 250 |
| 2 | 285 | 305 | 269 |
| 4 | 290 | 355 | 305 |
| 8 | 320 | 400 | 350 |
| 24 | 344 | 440 | 410 |

Man erkennt, dass bei Messung am UL-Stab die Wärmelagerung einer konventionellen Polyesterformmasse zu vergleichbaren Ergebnissen wie die Strahlenvernetzung einer Formmasse mit ungesättigtem Monomeranteil führt. Die Wärmelagerung der Formmasse 2 führt dagegen zu einer noch erheblich weitergehenden Kurzzeitwärmeformbeständigkeit. Die beobachteten Unterschiede zwischen UL-Stäben und Spulenkörpern werden hierbei durch die Probendicke hervorgerufen.

## Patentansprüche

1. Verfahren zur Herstellung eines Formteils mit hoher Kurzzeitwärmeformbeständigkeit,
**dadurch gekennzeichnet, dass**
a) ein Formteil aus einer Formmasse hergestellt wird, die
- 35 bis 100 Gew.-% eines thermoplastischen Polyesters,
- 0 bis 60 Gew.-% Füll- oder Verstärkungsstoffe,
- 0 bis 20 Gew.-% eines schlagzähmodifizierenden Kautschuks,
- 0 bis 30 Gew.-% eines Flammschutzmittels,
- 0 bis 20 Gew.-% eines Synergisten und
- 0 bis 5 Gew.-% andere Zusatzstoffe und/oder Verarbeitungshilfsmittel enthält,
b) dieses Formteil mindestens 1 Stunde bei einer Temperatur von 180 bis 250 °C gelagert wird.

2. Verfahren gemäß Anspruch 1,
**dadurch gekennzeichnet,**
**dass** der Polyester ausgewählt ist aus Polyethylenterephthalat, Polypropylenterephthalat, Polybutylenterephthalat, Polyethylen-2.6-naphthalat und Polybutylen-2.6-naphthalat.

3. Verfahren gemäß Anspruch 1,
**dadurch gekennzeichnet,**
**dass** beim Polyester die Diolkomponente und/oder die Dicarbonsäurekomponente 0,1 bis 100 Mol-% an ungesättigten Monomereinheiten enthalten.

4. Verfahren gemäß einem der Ansprüche 1 oder 3,
**dadurch gekennzeichnet,**
**dass** der Polyester aus Monomereinheiten besteht, die sich von folgenden Monomeren herleiten:
- einer Dicarbonsäure ausgewählt aus Terephthalsäure und 2.6-Naphthalindicarbonsäure sowie
- 0 bis 99,9 Mol-% Butandiol-1.4 und
- 100 bis 0,1 Mol-% 2-Butendiol-1.4.

5. Verfahren gemäß Anspruch 4,
**dadurch gekennzeichnet,**
**dass** im Diolanteil des Polyesters sich 10 bis 25 Mol-% von 2-Butendiol-1,4 herleiten.

6. Verfahren gemäß einem der vorhergehenden Ansprüche,
**dadurch gekennzeichnet,**
**dass** die Formmasse 0,1 bis 50 Gew.-% Füll- oder Verstärkungsstoffe enthält.

7. Verfahren gemäß Anspruch 6,
**dadurch gekennzeichnet,**
**dass** die Formmasse 5 bis 45 Gew.-% Füll- oder Verstärkungsstoffe enthält.

8. Verfahren gemäß einem der vorhergehenden Ansprüche,
**dadurch gekennzeichnet,**
**dass** die Formmasse 0,1 bis 25 Gew.-% Flammschutzmittel enthält.

9. Verfahren gemäß einem der vorhergehenden Ansprüche,
**dadurch gekennzeichnet,**
**dass** die Formmasse 0,1 bis 15 Gew.-% eines Synergisten enthält.

10. Verfahren gemäß einem der vorhergehenden Ansprüche,
**dadurch gekennzeichnet,**
**dass** das Formteil durch Spritzgießen oder Extrudieren hergestellt wird.

11. Verfahren gemäß einem der vorhergehenden Ansprüche,
**dadurch gekennzeichnet,**
**dass** das Formteil 2 bis 24 Stunden bei der erhöhten Temperatur gelagert wird.

12. Verfahren gemäß Anspruch 11,
**dadurch gekennzeichnet,**
**dass** das Formteil 4 bis 8 Stunden gelagert wird.

13. Verfahren gemäß einem der vorhergehenden Ansprüche,
**dadurch gekennzeichnet,**
**dass** das Formteil bei 190 bis 230 °C gelagert wird.

14. Verfahren gemäß Anspruch 13,
**dadurch gekennzeichnet,**
**dass** das Formteil bei 200 bis 220 °C gelagert wird.

15. Formteil, hergestellt mittels eines Verfahrens gemäß einem der vorhergehenden Ansprüche.

16. Formteil gemäß Anspruch 15,
**dadurch gekennzeichnet,**
**dass** es ein Steckverbinder, ein Spulenkörper, eine Leiterplatte, ein Gehäuse mit Leiterplattenfunktion, ein Relaisbauteil, ein Kondensatorenbecher, ein Schalter, ein Gehäuseteil oder eine Kondensatorfolie ist.
